# EUROPEAN PATENT APPLICATION

(11) **EP 4 134 582 A1**
(43) Date of publication of application: **15.02.2023**
(21) Application number: 21190334.9
(22) Date of filing: 09.08.2021
(51) Int. Cl.: F17C 1/08

(54) **FLUID VESSEL AND MANUFACTURING METHOD FOR A FLUID VESSEL**

(71) Applicant: Technische Universität München, 80333 München (DE)
(72) Inventor: GLEIS, Elisabeth, 81377 München (DE); ZAREMBA, Swen, 85774 Unterföhring (DE); IVANUSA, Teodor, 1000 Ljubljana (SI)
(74) Representative: Hoefer & Partner Patentanwälte mbB

(57) **Abstract**

The invention concerns a method of manufacturing a vessel (1) for housing a fluid, wherein the vessel (1) comprises at least one strut (3) extending through an inner space (19) of the vessel (1). The method comprises the steps of manufacturing (S1) a core structure (2) as a shaping element of the vessel (1), during and/or after manufacturing (S1) the core structure (2), providing (S2) the at least one strut (3) such that at least one end portion (6) of the at least one strut (3) extends from an outer surface (7) of the core structure (2), bending (S3) the at least one end portion (6) of the at least one strut (3), and arranging (S4) at least one outer vessel layer (5) to cover the at least one bent (S3) end portion (6) of the at least one strut (3). The invention further concerns a vessel (1) for housing a fluid.

## Description

The present invention concerns a method of manufacturing a vessel for housing a fluid and a vessel for housing a fluid.

In the automotive industry, for example, conventional pressure vessels or pressure tanks have a usually cylindrical vessel geometry, which is not optimal due to poor utilization of the design space intended for fuel storage. On the other hand, commonly employed geometries of pressure vessels deviating from the cylindrical shape towards a prismatic design have inferior mechanical properties, since they underlie high bending stresses. To alleviate this, common pressure vessels have increased wall thicknesses, which further leads to a higher mass of the vessels as well as to higher material consumption and with it to higher costs.

It is an object of the present invention to provide a method of manufacturing a vessel and a vessel, whereby a wide variety of vessel geometries may be achieved, while simultaneously providing reduced manufacturing costs and weight of the vessel.

The solution of this object is solved by the features of the independent claims. The dependent claims contain advantageous embodiments of the present invention.

The present invention provides a method of manufacturing a vessel for housing a fluid. Therein, the vessel comprises at least one strut extending through an inner space of the vessel. The method of manufacturing comprises the following steps. A core structure as a shaping element of the vessel is manufactured. During and/or after manufacturing the core structure, the at least one strut is provided such that at least one end portion of the at least one strut extends from an outer surface of the core structure. In addition, the at least one end portion of the at least one strut is bent. At least one outer vessel layer is arranged so as to cover the at least one bent end portion of the at least one strut.

The method of manufacturing a vessel according to the present invention provides an easy and cost-effective method for manufacturing a vessel suitable for housing fluids, especially for withstanding pressures dependent on the respective use-case of the vessel. In particular, with the method of manufacturing according to the present invention, a lightweight and cost-effective vessel with a wide variety of geometric configurations may be obtained.

Preferably, the method of manufacturing the vessel further comprises, before the bending step, a step of arranging at least one inner vessel layer to fully or partially cover an outer surface of the core structure such that the at least one end portion of the at least one strut extends through the at least one inner vessel layer. In other words, the method of manufacturing preferably includes arranging at least one inner vessel layer between the outer surface of the core structure and the outer vessel layer. This has the advantage that the method of manufacturing can provide a vessel with higher stability and that is particularly capable of withstanding higher, especially internal, pressures.

In the foregoing and in the following, the term "outer vessel layer" indicates a layer of material which is arranged so as to cover the at least one bent end portion of the at least one strut. The term "inner vessel layer" indicates a layer of material fully or partially covering the core structure. In other words, the at least one "inner vessel layer" is arranged under/beneath the at least one bent end portion of the at least one strut, i.e. between the at least one (especially all) bent end portion(s) of the at least one (especially all) struts and the core structure. In some embodiments, multiple inner vessel layers may be arranged between the at least one bent end portion of the at least one strut and the core structure. Additionally or alternatively, multiple outer vessel layers may be arranged on/above the at least one bent end portion of the at least one strut such as to cover said at least one bent end portion of the at least one bent strut and to face a surrounding of the vessel.

According to some embodiments, the vessel comprises a plurality of struts, and in the step of arranging the at least one outer vessel layer, multiple outer vessel layers are arranged, and at least one additional bending step is carried out between the multiple steps of arranging the outer vessel layers such that at least one strut includes at least one bent end portion sandwiched between two outer vessel layers. In other words, in the case the vessel comprises a plurality of struts and a plurality of outer vessel layers, the struts may be bent such that their respective bent portions are provided between different outer vessel layers. For instance, one or more struts may have at least one bent portion arranged between a first outer vessel layer and a second outer vessel layer, whereas one or more of the other/remaining struts may have at least one bent portion arranged between the second outer vessel layer and a third outer vessel layer. This has the advantage that forces, which act on the vessel layers via the struts, can be advantageously distributed among the multiple outer vessel layers. Thereby, a higher stability of the vessel is achieved.

Advantageously, during the bending step, the at least one end portion, preferably only a tip of the at least one end portion, of the at least one strut is brought into contact with an outer surface of the at least one inner vessel layer or with an outer surface of the at least one outer vessel layer or with an outer surface of the core structure. Thereby, advantageously, a contact surface between the at least one end portion, preferably between a tip of the at least end portion, of the at least one strut and the respective inner or outer vessel layer or the core structure can be increased, thus providing a higher stability of the vessel. Further advantageously, when only the tip of the at least one end portion of the least one strut is brought into contact with the respective surface of the inner or outer vessel layers or of the core structure, a sharp edge of the at least one end portion of the at least one strut can be prevented, thereby increasing the stability and longevity of the vessel by preventing damages to the inner or outer vessel layers or the core structure caused by said supposed sharp edge. In other words, for only the tip of the at least one end portion of the at least strut to be in contact with the respective aforementioned surface, the at least one end portion is bent so as to be curved, wherein only the tip of the at least one bent end portion is brought into contact with the respective aforementioned surface.

In an advantageous embodiment, the at least one strut is formed integrally with the core structure. Thereby, the method of manufacturing can be further simplified and an advantageously stabile vessel can be manufactured thereby.

Further advantageously, the at least one strut is arranged on and attached to the core structure, preferably to an outer surface of the core structure. Therein, for example, the at least one strut may be arranged on and attached to the core structure after or during manufacturing of the core structure and for example before the bending of at least one end portion of the at least one strut. Alternatively, the bending of the at least one end portion of the at least one strut may be carried out before arranging and attaching the at least one strut on/to the core structure. This has the advantage that the at least one strut may be, for example, manufactured independently of the geometric shape of the core structure and may be arranged and attached thereon/thereto after the manufacturing thereof. Thereby, the method of manufacturing the vessel can be further simplified and adapted to a variety of geometrical shapes of the manufactured vessel.

In an alternative embodiment, at least one strut may be inserted at least partially into the core structure. In this case, the at least one strut may be inserted through the core structure such that at least one end portion thereof extends from the outer surface of the core structure. Further preferably, the at least one strut may be inserted through the core structure such that both its end portions extend from the outer surface of the core structure, especially at opposite sides of the core structure.

Preferably, during arranging the at least one outer vessel layer and/or arranging the least one inner vessel layer, further preferably during arranging/attaching the at least one strut on/to or in the core structure, an inner space of the core structure is pressurized. For instance, the core structure may comprise an elastic and/or flexible material. This has the advantage that a structural deformation of the core structure can be prevented while arranging the at least one strut, especially while bending the at least one end portion of the at least one strut, and/or while arranging the outer and/or inner vessel layer(s). Further, this allows a more uniform arrangement of the inner and/or outer vessel layer(s) on and (partially or fully) around the core structure.

Further preferably, the step of arranging the at least one inner vessel layer and/or the at least one outer vessel layer comprises or is a step of winding or placing a fiber reinforced plastic as an inner vessel layer and/or as an outer vessel layer. In other words, the method of manufacturing may employ a wound fiber reinforced plastic as the at least one inner and/or outer vessel layer. This has the advantage that a vessel with high structural rigidity and low weight can be manufactured in a simple and cost-effective manner.

In an advantageous embodiment, before arranging the at least one outer vessel layer and/or the at least one inner vessel layer, the at least one end portion of the at least one strut is sharpened. This has the advantage that a damage to or a degradation of the at least one strut or of the inner and/or outer vessel layer(s), especially during arranging the at least one inner and/or outer vessel layer can be prevented. In particular, the at least one sharpened end portion of the at least one strut may pierce through one or more of the at least one inner and/or outer vessel layer(s) during arrangement, especially during winding, thereof. Preferably, the at least one end portion of the at least one strut is sharpened before the bending step.

Advantageously, the at least one strut comprises fibers. For example, the at least one strut may comprise or may be formed of fiber reinforced plastics. This has the advantage that the at least one strut can be lightweight, while simultaneously providing a high rigidity and thus further promoting the stability of the vessel.

In a preferred embodiment, in the bending step, the fibers of the at least one strut are at least partially separated from each other and bent in the at least one end portion of the at least one strut. Therein, these at least partially separated fibers may form a T-bend, a cross bend and/or a mushroom bend. In particular, in the case that a plurality of struts is provided, any combination of the aforementioned bends may be employed. In particular, the at least one strut may comprise one end portion formed according to one type of the aforementioned bends, while the other end portion thereof is formed according to another type of the aforementioned bends. This has the advantage that the end portions of the at least one strut may be adapted to a high variety of geometrical shapes of the vessel. In addition, the aforementioned bend types can individually be selected depending on space restrictions in the vessel and/or requirements for the contact area between the at least one strut and the at least one inner and/or outer vessel layer and/or the core structure.

Advantageously, the core structure is an injection molded thermoplastic skeleton. This has the advantage that the core structure can be manufactured easily and cost-effectively, while providing a high rigidity for the vessel.

Further advantageously, the core structure comprises a plurality of subunit core structures which are joined to each other during the manufacturing of the core structure. The joining of these subunit core structures may be achieved via attachment clips, gluing and/or welding. This has the advantage that the core structure can be manufactured with a high variety of geometrical configurations. In addition, the manufacturing of smaller subunits is advantageous for the manufacturing process of the core structure, since, for example, an injection molding of larger parts can be more difficult.

Preferably, after arranging the at least one outer vessel layer and/or after arranging the at least one inner vessel layer, the core structure is at least partially (preferably completely) removed from the vessel, without removal of the at least one strut. With this, it is possible to manufacture a lightweight and structurally stabile vessel, wherein an inner volume thereof is advantageously increased.

Advantageously, both end portions of the at least one strut or of the multiple struts may be bent and/or sharpened.

The present invention also concerns a vessel for housing a fluid. Therein, the vessel comprises at least one inner vessel layer, at least one outer vessel layer surrounding the at least one inner vessel layer and at least one strut. The at least one strut extends through an inner space of the vessel. Further, the at least one strut comprises at least one end portion extending through the at least one inner vessel layer. The at least one strut comprises at least one bent end portion, which is bent so as to be arranged between the at least one inner vessel layer and the at least one outer vessel layer.

In particular, the vessel may include the features of the foregoing described advantageous embodiments of the manufacturing method thereof as preferred embodiments of the vessel.

The vessel may especially be configured to house a pressurized fluid.

Further details, advantages, and features of preferred embodiments of the present invention are described in detail with reference to the figures.

### Therein,

Fig. 1 shows a schematic cross section of a vessel according to a first embodiment of the present invention;
Fig. 2 shows a block diagram of a method of manufacturing the vessel according to the first embodiment of the present invention;
Figs. 3a-3d show schematic views of core structures and strut arrangements for the vessel according to the first embodiment of the present invention;
Figs. 4a-4c show schematic views and cross sections of an inner vessel layer and bent struts of the vessel according to the first embodiment of the present invention;
Fig. 5 shows a schematic view of the core structure and sharpened struts of the vessel according to the first embodiment of the present invention;
Fig. 6 shows a schematic view of the core structure and an inner vessel layer of the vessel according to the first embodiment of the present invention for explaining an effect of struts counteracting a slippage tendency of the inner vessel layer;
Figs. 7a-7b show schematic views of the core structure and struts of the vessel according to the first embodiment of the present invention;
Figs. 8a-8b show schematic views of a core structure and struts of a vessel according to a second embodiment of the present invention;
Figs. 9a-9c show schematic views of a core structure and struts of a vessel according to a third embodiment of the present invention; and
Fig. 10 shows a schematic view of the core structure and struts of the vessel according to the third embodiment of the present invention.

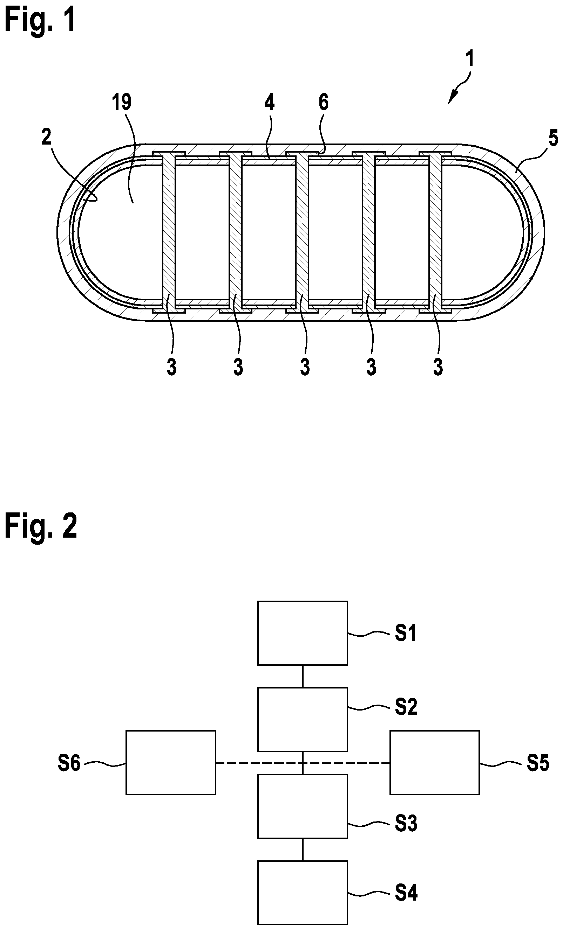

Fig. 1 shows a schematic cross section of a vessel 1 according to a first embodiment of the present invention.

The vessel 1 comprises an inner vessel layer 4, an outer vessel layer 5 and a plurality of struts 3. In the first embodiment of the present invention, the vessel 1 also comprises the core structure 2 in the final product, i.e. in the final vessel 1. In particular, the vessel 1 comprises the core structure 2 as an inner lining.

As will be described in more detail in the following, the struts 3 of the vessel 1 are formed so as to have bent end portions 6 arranged between the inner vessel layer 4 and the outer vessel layer 5. In the present embodiment, as an example, the inner vessel layer 4 and the outer vessel layer 5 are formed of fiber reinforced plastics (FRP). The inner vessel layer 4 and the outer vessel layer 5 may be connected to one another for example via being form-fit or via an adhesive. For example, for gluing the vessel layers 4, 5 to one another and/or to the core structure 2, a separate adhesive may be used. Alternatively, an adhesive included in a thermoset or thermoplastic matrix of the inner vessel layer 4 and/or of the outer vessel layer 5 may be used for gluing the vessel layers 4, 5 to one another and/or to the core structure 2.

The struts 3 provide, especially when the vessel 1 is filled with a pressurized fluid, a mechanical stability of the vessel 1 by (at least partially) transforming a pressure acting on the inner vessel layer 4 and on the outer vessel layer 5 into a tensile load acting on the struts 3, thereby relieving strain on the respective vessel layers 4, 5.

In the foregoing and in the following, the inner vessel layer 4 is denoted as a material layer which covers the core structure 2. It should, however, be noted that the inner vessel layer 4 can comprise a plurality of inner vessel layers 4, which, taken together, cover the entirety of the core structure 2. In other words, for instance, a plurality of inner vessel layer sections (not shown) may be arranged side-by-side and/or with overlap to form the inner vessel layer 4 covering the core structure 2. "Multiple inner vessel layers 4" are to be understood as a case in which the material of the inner vessel layer(s) 4 is arranged so as to overlap such that, in the cross-sectional view of figure 1, multiple inner vessel layers 4 are arranged on top of each other.

In the foregoing and in the following, the outer vessel layer(s) 5 is denoted as a material layer which covers the inner vessel layer(s) and the bent end portions 6 of the struts 3. Each individual outer vessel layer 5 may also comprise a plurality of outer vessel layer sections (not shown) arranged side-by-side and/or with overlap to form the outer vessel layer 5. Further, multiple, i.e. a plurality, of outer vessel layers 5 may be arranged such that in a thickness direction (up-down direction in Fig. 1, i.e. in an extension direction of the struts 3) of the vessel 1, multiple stacked outer vessel layers 5 are provided. In the embodiment shown in Fig. 1, in said thickness direction of the vessel 1, only one outer vessel layer 5 is provided.

In this embodiment, the struts 3 are formed so as to protrude through the core structure 2, which will be described in more detail in the following. The core structure 2 is a shaping element, which provides the general shape of the resulting vessel 1.

Fig. 2 shows a block diagram of a method of manufacturing the vessel 1 according to the first embodiment of the present invention.

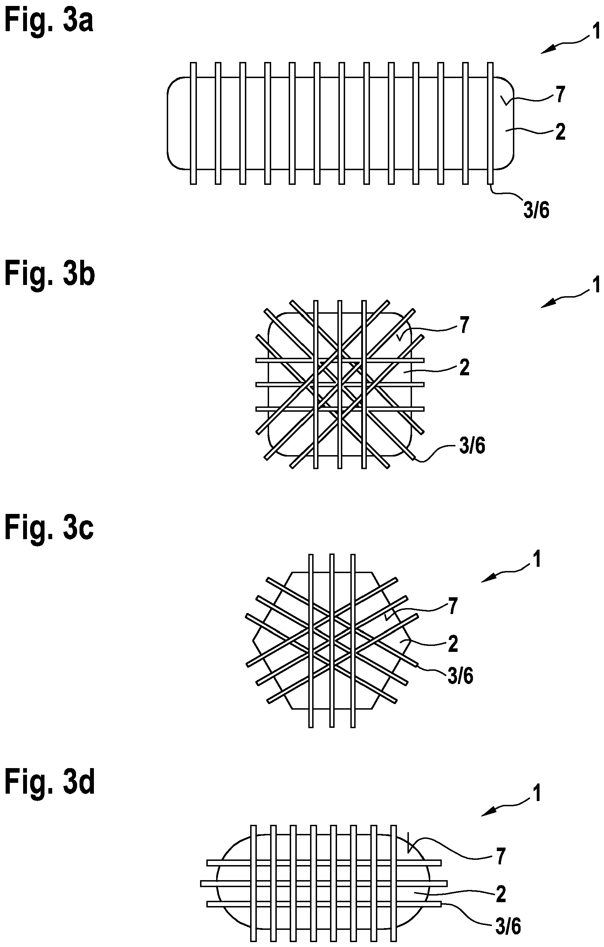

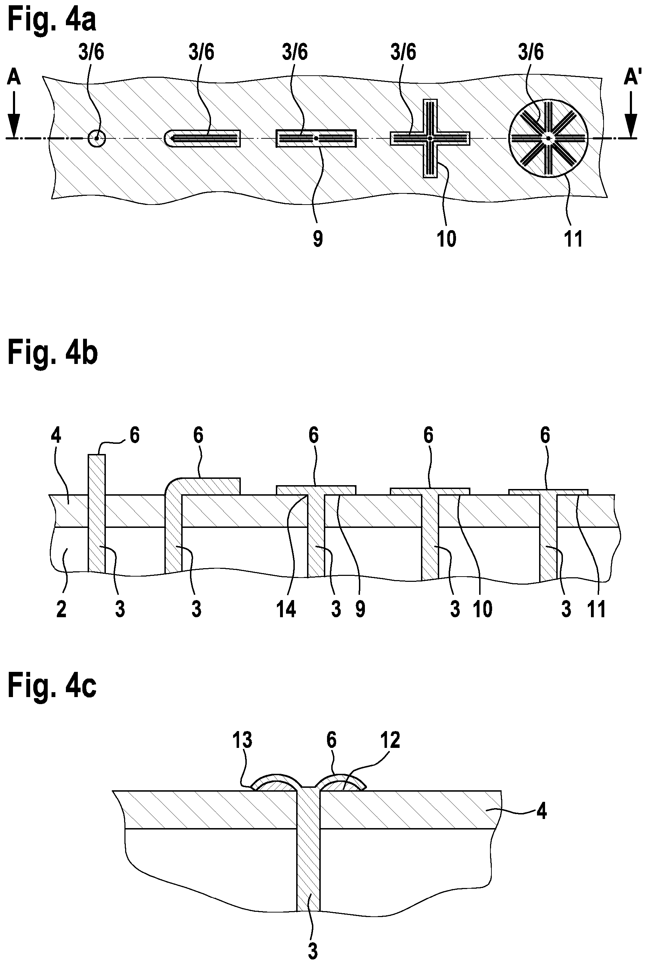

The method of manufacturing the vessel 1 comprises the following steps. First, the core structure 2 is manufactured S1. During and/or after manufacturing S1 the core structure 2, the method comprises providing struts 3 such that the end portions 6 of the struts 3 extend from an outer surface 7 of the core structure 2 (see also Figs. 3a-3c) S2. Further, the end portions 6 of the struts 3 are bent S3 (see also Figs. 4a-4c). In addition, at least one outer vessel layer 5 is arranged to cover the bent end portions 6 of the struts 3 S4.

In general, it is not necessary that both end portions 6 of the all struts 3 are bent S3. In other embodiments, only one strut 3 may be provided. Further, only one end portion 6 of one, of multiple or of all struts 3 may be bent. For example, the end portions 6 of the struts 3 may be arranged alternating between bent end portions 6 and un-bent end portions 6. It is also possible to only partially bend the end portion(s) 6 of the strut(s) 3 such that the bent end portion(s) 6 are not brought into contact with the outer surface 7 of the core structure 2 or with an outer surface of the inner vessel layer 4.

As an additional optional step S5, before bending the end portions 6 of the struts 3 S3, the method of manufacturing the vessel 1 may comprise a step of arranging at least one inner vessel layer 4 (see: Fig. 1) so as to cover or at least partially cover an outer surface 7 of the core structure 2. Then, the bending is carried out such that the bent end portions 6 of the struts 3 are arranged between the inner vessel layer 4 and the outer vessel layer 5.

In general, it is not necessary to provide an inner vessel layer 4. For instance, the at least one strut 3 may be bent such that a bent end portion 6 thereof is arranged between the outer surface 7 of the core structure 2 and the outer vessel layer 5.

In addition, in the additional optional step S5 of arranging at least one inner vessel layer 4, multiple inner vessel layers 4 may be arranged before the bending step S3.

Further, although in Fig. 1 the bent end portions 6 of the struts 3 are shown as being arranged between the inner vessel layer 4 and the outer vessel layer 5, it should be noted that the foregoing described method of manufacturing can be carried out such that the bent end portions 6 of the struts 3 are arranged between separate layers of multiple outer vessel layers 5. More specifically, for instance, at least one bent end portion 6 of one strut 3 may be arranged between the core structure 2 (for instance, in a region of the core structure 2 on which no inner vessel layer 4 is provided) and a first outer vessel layer 5. Then, at least one bent end portion 6 of another strut 3 may be arranged between the first outer vessel layer 5 and a second outer vessel layer 5. Then, at least one bent end portion 6 of another strut 3 may be arranged between the second outer vessel layer 5 and a third outer vessel layer 5 and so on. In addition, one end portion 6 of a strut 3 can be arranged between different layers than the other end portion 6 of the same strut 3.

In other words, the foregoing described steps may be carried out as follows: S1, S2, S3, S4; or S1, S2, S5, S3, S4; or S1, S2, S5, S5, S3, S4; or S1, S2, S5, S3, S4, S3, S4; and so on. In other words, the bent end portions 6 of the at least one strut 3 may be arranged in different layers of the inner and/or outer vessel layers 4, 5, respectively. In this case, a force acting on the struts 3, which stabilizes the vessel 1 when under (high) pressure, may be advantageously dispersed between different layers of the inner and/or outer vessel layers 4, 5 and vice versa.

The foregoing described steps S5, S4 of arranging at least one inner and/or outer vessel layer 4, 5 comprises at least partially covering the core structure with FRP. This step S5, S4 can be conducted using a pre-impregnated fiber material using thermoplastics or thermoset matrix materials or a combination of these. Therefore, different suitable processes for steps S5, S4 exist, for example filament winding and/or automated fiber placement (AFP) and/or non-crimp fabric (NFC) placement and/or braiding with resin transfer molding (RTM). It is also possible to place dry fibers/textiles, as the vessel layer(s) 4, 5 with an additional infusion and/or injection process. In this case, the core structure 2 can be advantageously configured to being resin tight.

If thermoset material is used in S5, S4, curing and/or partial curing can be conducted either in-situ during the process S5, S4 or in a separate, optional curing step (not shown). The bending of the struts 3 can either be performed on cured, on partially cured or on uncured laminate to optimize the consolidation of the struts 3 with the laminate, for example of the FRP 4, 5. As stated above, it is possible to subdivide such layup of the vessel layers 4, 5 and to cure the initial FRP layers (as a first inner vessel layer 4), subsequently apply more uncured layers S5,S4 and bend the struts 3 on the uncured laminate. This has the additional advantage of having dimensional and overall stability provided by the cured layers as well as a good consolidation due to the other uncured layers.

Figs. 3a-3d show schematic views of core structures 2 and strut arrangements 3 of the vessel 1 according to the first embodiment of the present invention. As can be taken therefrom, a high variety of different core structure 2 shapes and sizes can be manufactured. Since the core structure 2 is the shaping element of the vessel 1, the vessel 1 can also comprise these shown shapes and sizes. The number, orientation and shape of the struts 3 can vary.

Further, in this embodiment, as shown in Figs. 3a-3d, the struts 3 are arranged such that their end portions 6 extend and protrude from the core structure's 2 outer surface 7. Preferably, a majority of struts 3 is arranged such that the struts 3 extend and protrude perpendicular to the outer surface 7 of the core structure 2. This has the advantage that the struts 3 can provide a high stability of the manufactured vessel 1.

As shown in Figs. 1 and 3a-3d in particular, the struts 3 act as load carrying elements in the final vessel 1 and/or as manufacturing support during the fiber layup (steps S4, S5).

Further, in Figs. 3b-3d, the struts 3 do not intersect. In other embodiments, these may be arranged and manufactured such that they are interconnected, i.e. intersect. In the case that the struts 3 intersect, they may also be formed integrally with one another.

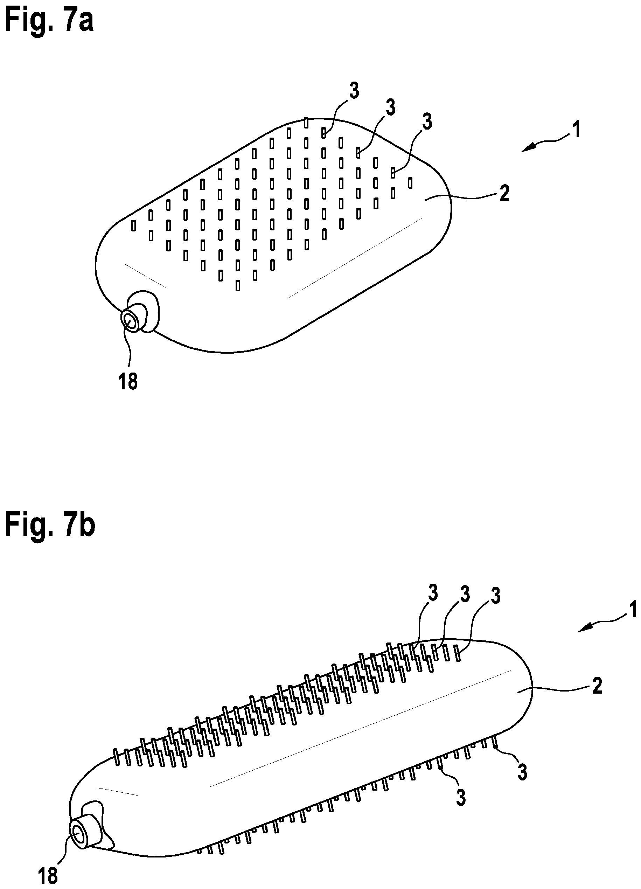

The step of manufacturing the core structure 2 along with the arrangement of struts 3 according to the first embodiment of the present invention is now described with reference to Figs. 3a-3d as well as to Figs. 7a-7b. Figs. 7a-7b show schematic views of the core structure 2 and the struts 3 of the vessel 1 according to the first embodiment of the present invention.

In this embodiment, as discussed above, the core structure 2 is manufactured such that it can remain in the vessel 1, in particular as an inner lining thereof.

The struts 3 consist of FRP. The fiber direction within the struts 3 is mainly unidirectional, but can comprise fiber directions deviating from the shown strut 3 elongation direction. The plastic material in the struts 3 consists either of a thermoplastic or a thermosetting material. Thermoplastic based struts 3 can be bent (see: Fig. 4) using heat, bringing the material into a plastified/melt state. Thermosetting struts 3 are in a pre-consolidated state, meaning a resin thereof is not fully cured. In this case, the struts 3 have the required structural properties needed for manufacturing the vessel 1. The thermosetting struts 3 can include hot melt and bi-stage resin systems, which allow for stepwise curing with different temperatures. Alternatively, other curing mechanisms such as ultra violet radiation may be employed. In addition, the struts 3 may be manufactured using continuous production processes such as, for example, pultrusion, continuously pressing, etc.

In the first step S1, the core structure 2 with struts 3 is manufactured. The core structure 2 acts as a shaping element and as a support for the fiber (FRP) application described above with reference to steps S4, S5.

The core structure 2 can comprise multiple materials. In this regard, the core structure 2 may be manufactured for example by multi-material injection molding, by multi-stage injection molding and/or by additive manufacturing. This also enables embodiments of the core structure 2, in which the core structure 2 is at least partially removable.

To fixate the struts 3 in the core structure 2, various methods can be used. For example, the struts 3 can be incorporated directly during the manufacturing S1 of the core structure 2, or in separate steps. For example, the struts 3 may be protruded through the core structure 2 (as shown in Figs. 1, 3a-3d, and 4a-4c), or may be attached to the outer surface 7 of the core structure 2 using mechanical locking mechanisms and/or adhesives and/or welding.

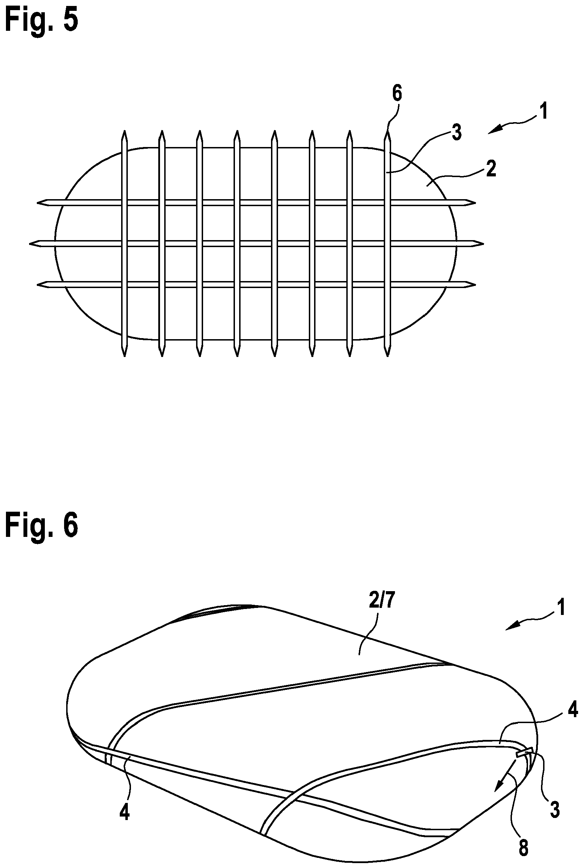

Now, with reference to Figs. 5 and 6, the steps S4, S5 along with an additional optional step S6 of the present embodiment are further described.

Fig. 5 shows a schematic view of a core structure 1 and struts 3 of the vessel 1 according to the first embodiment of the present invention. In particular, Fig. 5 shows the result of an additional, optional step S6. In this step S6, the end portions 6 of the struts 3 are sharpened. In particular, the sharpening S6 of the end portions 6 may be carried out before and/or after the bending step S3, especially before and/or after partially bending the end portions 6. The sharpening S6 of the end portions 6 may be carried out before and/or after arranging the at least one inner and/or outer layer(s) 4, 5. All struts 3 may be sharpened simultaneously or individually before and/or between the other manufacturing steps S2-S4, S5.

For sharpening S6 the end portions 6, the end portions 6 may be ground and/or sanded down and/or cut. Especially following the bending step S3, the end portions 6 of the struts 3 may be ground or sanded down in order to provide a flat surface.

The sharpened end portions of the struts 3 can thus advantageously and easily pierce the inner vessel layer(s) 4 and/or the outer vessel layer(s) 5 before the bending step S3 thereby preventing damage to the struts 3. In an additional step, the sharpened end portions 6 may be removed before bending S3 (not shown).

Further, the bent end portions 6 of the struts 3 may be glued to the core structure 2 and/or to the inner vessel layer 4 and/or to the outer vessel layer 5. For this, the end portions 6 may be glued using an adhesive property of a matrix of the inner and/or outer vessel layer 4, 5 (for instance, thermoset resin). Alternatively, additional adhesive material may be used to glue the bent end portions 6 of the struts 3.

Fig. 6 shows a schematic view of the core structure 2 and of an inner vessel layer 4 section of the vessel 1 according to the first embodiment of the present invention for explaining an effect of struts 3 counteracting a slippage tendency of the inner vessel layer 4 sections. In particular, for simplicity, Fig. 6 shows a single strut 3 protruding through the inner vessel layer 4 of the vessel 1.

As can be taken from Fig. 6, in the steps S5 or S4 of arranging the inner vessel layer(s) 4 and/or the outer vessel layer(s) 5 (not shown), the strut 3 provides a fixation point for the respective layer 4, 5. Such a strut 3 may especially be referred to as a "winding pin", which fixates sections of the layers 4, 5 during winding. For example, when filament winding, automated tape placement or other complex manufacturing methods are used for steps S5 and S4, the struts 3, which protrude through the respective layer(s) 4, 5 provide anchor or fixation points such that the respective layer(s) 4, 5 does not slip from the core structure 2 or the underlying inner vessel layer 4. The tendency of a section of the inner vessel layer 4 to slip, which is prevented via the strut 3, is shown by the arrow 8 in Fig. 6. Without the shown strut 3, the section of the inner vessel layer 4 would slip from the outer surface 7 of the core structure 2.

The strut 3, which acts as a winding pin, can either protrude the inner volume of the vessel 1 (as the other struts 3) or can be attached to the core structure 2 without protruding the inner volume of the vessel 1. The strut 3 acting as a winding pin may comprise or consist of a material different from the carbon fiber reinforced plastic struts 3 described above. For example, the strut 3 acting as a winding pin may comprise or consist of injection molded thermoplastic.

Alternatively or additionally to the struts 3, which provide additional stability of the vessel 1, the core structure 2 can also be manufactured so as to have these winding pins on the outer surface 7 of the core structure 2. In particular, these winding pins may be arranged so as not to lay inside the vessel 1 volume, i.e. not extending through the core structure 2 but merely arranged on the outer surface 7 thereof. For example, these winding pins may be arranged especially at locations at which slipping 8 of the layers 4, 5 is most likely, for example at domes (rounded corners) of the core structure 2.

In addition, as described above, the core structure 2 is manufactured S1 so as to be the (inner) liner of the vessel 1. The core structure 2 can be manufactured using a manufacturing method such as blow molding. The struts 3 can be inserted in an additional step by melting or drilling holes in the core structure 2 and inserting the struts 3 using a suitable adhesive, wherein the adhesive seals the core structure 2. A vessel 1 provided with a core structure 2 providing the function of a polymer liner is commonly referred to as a "type IV pressure vessel".

Further, in this case, during the steps S4, S5, the core structure 2, as the liner, can be pressurized or inflated, in particular via the port 18 shown in Figs. 7a and 7b.

In case of using the core structure 2 as the liner, the step S5 of arranging at least one inner vessel layer 4 may be omitted. In other words, the struts 3 may be bent S3 so as to be arranged between the (outer surface 7 of the) core structure 2 and the outer vessel layer(s) 5. Thereby, the struts 3 can provide a high mechanical stability for high pressures acting, especially also on the outside of the vessel 1.

Now, with reference to Figs. 4a-4c, the bending S3 step of the manufacturing method of the present invention will be described. Figs. 4a-4c show schematic views and cross sections of an inner vessel layer 4 and bent struts 3 of the vessel 1 according to the first embodiment of the present invention.

In particular, Figs. 4b and 4c show a side view cross-section taken along the line A-A' of Fig. 4a, wherein Fig. 4a shows a top view of the inner layer 4.

Fig. 4a particularly shows the end portions 6 of the struts 3. The leftmost strut 3 in Fig. 4a is in an unbent state. The further four shown end portions 6 show different bending types. In particular, as shown in the second from the left strut 3, the entire end portion 6 thereof may be bent in a direction parallel (horizontal direction of Figs. 4a-4c) to the inner vessel layer 4 so as to be parallel to and in contact with the inner vessel layer 4. On the other hand, as shown in the, from the left, further three examples of bending types, the individual fibers of the struts 3 may be separated or divided in the end portions 6 thereof. Further, the separated fibers may be grouped, wherein the resulting groups may be bent in different directions. These bending types comprise, for example, from the third strut from the left to the right: a T-bend 9, a cross bend 10 and a mushroom bend 11.

Fig. 4b shows the corresponding cross-sectional views of the bending types depicted in Fig. 4a.

Further, as shown in Fig. 4c, the end portions 6 of the struts 3 do not need to be bent so as to be fully/completely in contact with and parallel to the inner vessel layer 4. Herein, only the tips 13 of the end portions 6 are in contact with the inner vessel layer 4. Further, an additional material 12 such as a resin or plastic, especially a ring-like structure, may be disposed between the end portions 6 of the struts 3 and the inner vessel layer 4 (and/or the core structure 2 and/or the outer vessel layer 5, in the case that the end portions 6 are bent so as to be in contact with those).

The additional material 12 may be a washer or metal ring. In particular, the additional material 12 may comprise metal, ceramic, fiber reinforced plastics or plastic material. The additional material 12 can either be a separately manufactured part or may be directly implemented in the core structure 2 using a suitable manufacturing process (e.g. multi-material injection molding or multi-stage injection molding). In addition, the additional material 12 can cover the entire circumference of the strut 3 (particularly the circumference of the end portion 6 thereof), or only the circumferential area to which the end portion 6 is bent (as shown in Fig. 4c). In other words, the additional material 12 can also be disposed between the tip of the end portion 6 and the inner vessel layer 4 or the core structure 2 or the outer vessel layer 5.

This has the advantage that the bending shown in Fig. 4c, in which the end portions 6 are bent in an arced or curved shape, prevents sharp edges 14 of the end portions 6 from damaging the inner vessel layer 4 or the core structure 2 or the outer vessel layer 5.

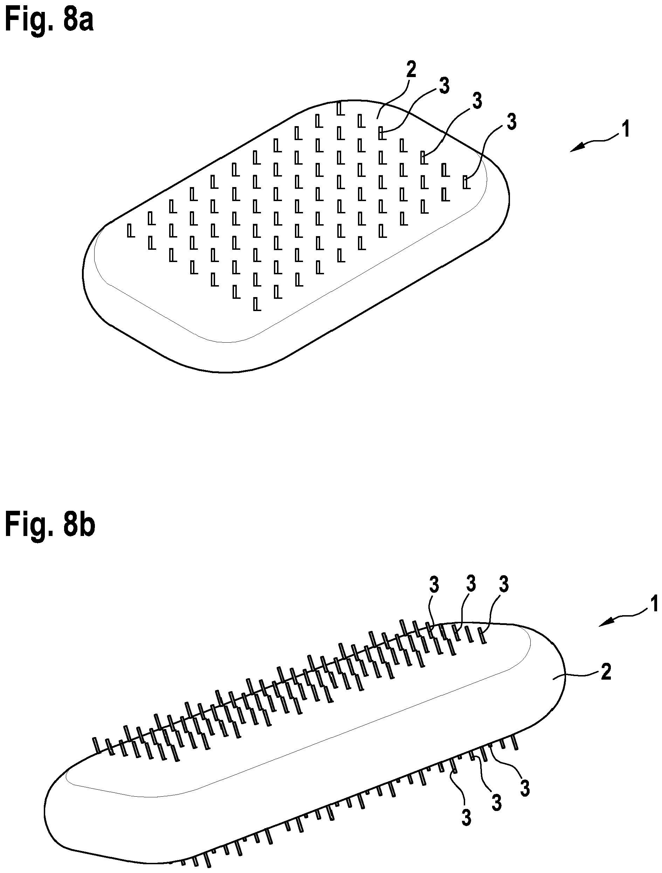

Now, with reference to Figs. 8a-8b, a second embodiment of the present invention will be explained. Figs. 8a-8b show schematic diagrams of a core structure 2 and struts 3 of a vessel 1 according to the second embodiment of the present invention.

In the second embodiment of the present invention, the core structure 2 is manufactured S1 so as to be removable from the inner volume of the vessel 1.

In this embodiment, the core structure 2 may comprise a salt-core, a sand-core and/or a foam-core. The core structure 2 may also comprise a combination of these materials. Alternatively, the core structure 2 can also be manufactured so as to be only partially removable, i.e. comprise the described removable materials as well as the materials described with reference to the first embodiment of the core structure 2 of the vessel 1. The struts 3 are not removed.

The struts 3 can be implemented in the core structure 2 directly during the manufacturing S1 thereof. The core structure 2 can be dissolved at the end of the manufacturing process of the vessel 1, in order to obtain a vessel 1 commonly referred to as a "type V pressure vessel". In other words, the vessel 1 according to the second embodiment of the present invention, as the final product, does not include (at least partially) the core structure 2, and does not include the core structure 2 as the inner liner of the vessel 1.

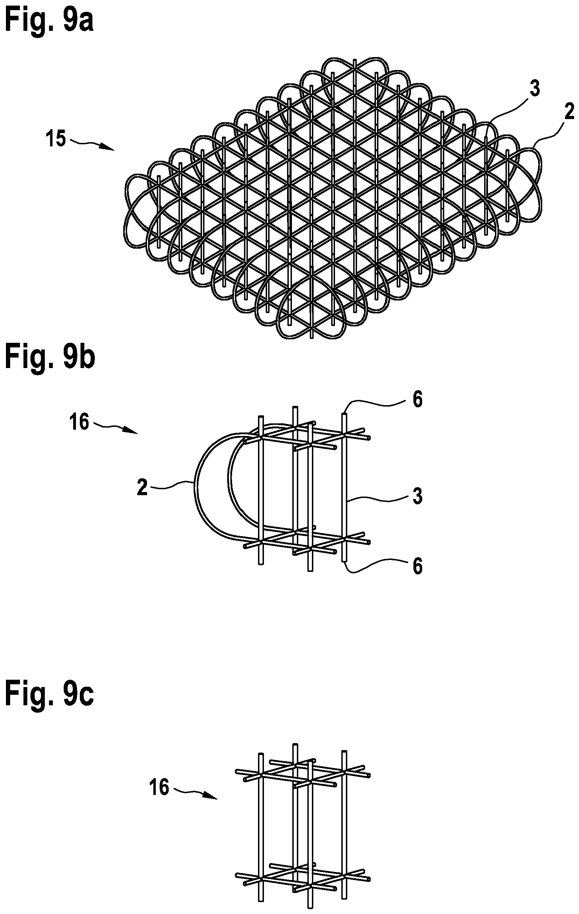

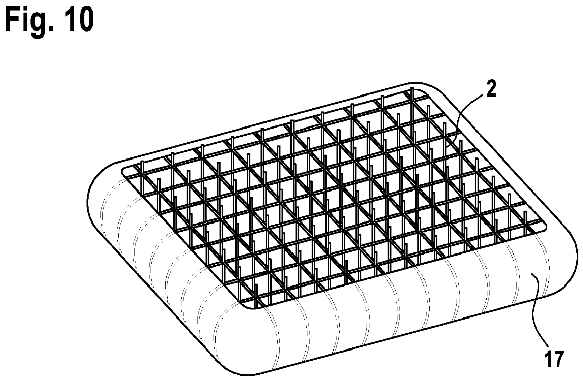

Now, with reference to Figs. 9 and 10, a third embodiment of the present invention will be described. Figs. 9a-9c show schematic views of a core structure 15 and struts 3 of a vessel 1 according to the third embodiment of the present invention.

In the third embodiment of the present invention, as shown in Fig. 9a,the core structure 2 is a thermoplastic skeleton 15. The skeleton 15 is used to hold the struts 3 and additionally serves as a core for subsequent steps, for example S4, S5 (e.g. filament winding).

In this example, the struts 3 are arranged in a direction perpendicular to the vessel 1 layers, as the final product. The struts 3 of this embodiment are FRP struts 3.

The manufacturing of such a skeleton 15 comprises primarily the following steps: Manufacturing, especially unidirectional, FRP profiles for the struts 3. These FRP profiles are manufactured using, for example, pultrusion or press consolidation with a thermoplastic matrix (e.g. PA6, PVA, PEI or PEEK). Then, the struts 3 are positioned and mounted in a mold for injection molding to manufacture the skeleton 15. In the step of positioning the struts 3 in the mold, the struts 3 may be reshaped and repositioned. Thereby, the skeleton 15 may be manufactured, wherein the skeleton 15 can comprise continuous fibers, and/or short fibers. Further, as shown in Figs. 9b and 9c, the skeleton 15 may comprise a plurality of subunit core structures 16, thereby allowing the skeleton 15 to be manufactured modularly. Joining of these subunit core structures 16 can be achieved via the use of clips, gluing or welding or combinations thereof. The skeleton 15 can primarily comprise carbon fibers. For increased volumetric and weight efficiency, parts of the skeleton 15 which do not contain carbon fibers can be made of a solvable material (as described with reference to the second embodiment of the present invention) to be removed after the final consolidation steps S4, S5 (e.g. filament winding and curing). In general, the skeleton 15 can comprise parts that comprise a solvable material, such that the skeleton 15 can be partially or entirely removed after the outer vessel layer 5 has been arranged, and especially cured.

For example, the subunit core structure 16 shown in Fig. 9b may be employed for the dome parts (rounded edges, corners of the vessel 1), whereas the subunit core structure 16 shown in Fig. 9c may be employed for the remaining portions of the skeleton 15.

A vessel 1 as the final product provided with and (at least partially) comprising such a skeleton 15 may be thus manufactured as a linerless "type V pressure vessel".

Fig. 10 shows a schematic view of the core structure 2 and struts 3 of the vessel 1 according to the third embodiment of the present invention. In particular, Fig. 10 shows the skeleton 15 of Figs. 9a-9c, wherein the skeleton 15 of Fig. 10 includes additional dome plates 17 or dome material 17.

The dome plates 17 may be additional plates attached to the skeleton 15. Alternatively or additionally thereto, the dome plates 17 may be manufactured as dome material 17 by filling the dome regions of the skeleton 15 with material, such as thermoplastic, resin or FRP. As also described above, the skeleton 15 may additionally comprise winding pins, thus allowing for more complex winding patterns in the steps S4 and S5. These pins can either be provided by the struts 3 or the injection mold for the skeleton 15 may include these pins before injection molding the skeleton 15 (not shown).

In the case of winding the respective vessel layers 4, 5, these dome plates 17 especially prevent the vessel layers 4, 5 from falling/protruding into the core structure 2, thereby allowing for an easier winding process when manufacturing the vessel 1.

The skeleton 15 provides a core structure 2 that structurally supports the following manufacturing processes, especially steps S4 and S5. In addition, the skeleton 15 can be used as a flow guidance in a storage vessel.

The skeleton 15 may also be manufactured via 3D-printing methods, for example by fused filament fabrication. In this case, 3D-printing processes can be used to fix the struts 3 in defined positions, for example, via overprinting.

In the foregoing described advantageous embodiments, different material configurations of the vessel layer(s) 4, 5, as well as of the core structure 2 and of the struts 3 may be used.

For the struts 3, thermoplastic or thermoset matrices may be used. In the case of using the core structure 2, as described in the first embodiment, as a liner, the core structure 2 may be configured as a polymer liner. For the inner vessel layer(s) 4, a thermoplastic matrix may be employed. Further, for the outer vessel layer(s) 5, a thermoplastic matrix may be used.

In the case of using a thermoset matrix for the struts 3, the inner and outer vessel layer(s) 4, 5 may comprise a thermoset matrix.

The skeleton 15 may be a thermoplastic skeleton 15. In this case, the skeleton 15 may be a multi-material thermoplastic structure including partially solvable parts or may be entirely unsolvable.

The skeleton 15 or the core structure 2 may be thermoplastic, or especially a multi-material structure with thermoplastic and thermoset materials.

In the case of solvable materials, a sand core, a salt core and/or a foam core may be employed as the core structure 2 or as the skeleton 15 or as part thereof.

| **Struts** | **Core Structure** | **First CCC continuous fiber placement** | **Second continuous fiber placement (after bending)** |
|---|---|---|---|
| Thermoplastic matrix | Polymer liner | Thermoplastic matrix | Thermoplastic matrix |
| Thermoset matrix | Thermoplastic skeleton | Thermoset matrix | Thermoset matrix |
| | Solvable thermoplastic skeleton | | |
| | Multi-material thermoplastic structure (e.g. partially solvable) | | |
| | Multi-material structure with thermoplastic and thermoset | | |
| | Sand core | | |
| | Salt core | | |
| | Foam core | | |

### Table 1 Overview of especially advantageous material combinations

As can be taken from table 1, advantageous material combinations for the struts 3, the core structure 2, the inner vessel layer 4 ("First continuous fiber placement"), and the outer vessel layer 5 ("Second continuous fiber placement (after bending)") are possible. Particularly, the following combinations are feasible:
Combination 1:
   The struts 3 comprise a thermoplastic matrix and fibers. The inner vessel layer 4 comprises a thermoset matrix and the outer vessel layer 5 comprises a thermoset matrix.
Combination 2:
   The struts 3 comprise a thermoplastic matrix and fibers. The inner vessel layer 4 comprises a thermoplastic matrix and the outer vessel layer 5 comprises a thermoset matrix. This combination is especially advantageous for embodiments without a liner, since thermoplastic layers have preferable gas barrier properties compared to thermoset layers, such that in a type V vessel, the barrier properties can be achieved by thermoplastic inner layers 4.
Combination 3:
   The struts 3 comprise a thermoplastic matrix and fibers. The inner vessel layer 4 comprises a thermoplastic matrix and the outer vessel layer 5 comprises a thermoplastic matrix. This combination is also especially advantageous for embodiments without a liner due to the preferable gas barrier properties of the thermoplastic matrix as compared to thermoset layers.
Combination 4:
   The struts 3 comprise a thermoplastic matrix and fibers. The inner vessel layer 4 comprises a thermoset matrix and the outer vessel layer 5 comprises a thermoplastic matrix. This combination is especially advantageous in the case that a higher chemical resistance of the inner vessel layer 4 is required for a use-case of the vessel 1.
Combination 5:
   The struts 3 comprise a thermoset matrix and fibers. The inner vessel layer 4 comprises a thermoset matrix and the outer vessel layer 5 comprises a thermoset matrix.
Combination 6:

   The struts 3 comprise a thermoset matrix and fibers. The inner vessel layer 4 comprises a thermoplastic matrix and the outer vessel layer 5 comprises a thermoset matrix. This combination is also especially advantageous for embodiments without a liner due to the preferable gas barrier properties of the thermoplastic matrix as compared to thermoset layers.
Combination 7:
   The struts 3 comprise a thermoset matrix and fibers. The inner vessel layer 4 comprises a thermoplastic matrix and the outer vessel layer 5 comprises a thermoplastic matrix.
Combination 8:
   The struts 3 comprise a thermoset matrix and fibers. The inner vessel layer 4 comprises a thermoset matrix and the outer vessel layer 5 comprises a thermoplastic matrix.

In addition or alternatively thereto, the struts 3 may comprise or may be made of a metal. The metal struts 3 can be suitably combined with thermoset or thermoplastic inner vessel layers 4 and/or with thermoset or thermoplastic outer vessel layers 5.

The foregoing described advantageous embodiments of the vessel 1, in particular the core structure 2 and the struts 3 thereof, allow for highly complex winding patterns in the steps S4 and/or S5. Thereby, especially after curing the outer vessel layer(s) 5 thereof, a vessel 1 with a high stability is manufactured. Therein, the struts 3 provide advantageous mechanical stability, allowing the vessel 1 to withstand high internal pressures.

In addition to the foregoing written description of the present invention, it is herewith explicitly referred to the graphic description of the present invention shown in figures 1 to 10.

### List of reference symbols

- 1: vessel
- 2: core structure
- 3: strut
- 4: inner vessel layer(s)
- 5: outer vessel layer(s)
- 6: end portion(s) of strut
- 7: outer surface of core structure
- 8: slippage tendency of inner vessel layer or outer vessel layer
- 9: T-bend
- 10: cross bend
- 11: mushroom bend
- 12: additional material
- 13: tips of end portions of strut
- 14: sharp edges of end portions of strut
- 15: skeleton
- 16: subunit of core structure
- 17: dome plates / dome material
- 18: port of core structure as liner
- 19: inner space of vessel
- S1: manufacturing core structure
- S2: providing strut
- S3: bending end portion(s) of the strut
- S4: arranging outer vessel layer
- S5: arranging inner vessel layer
- S6: sharpening at least one end portion of strut

## Claims

1. Method of manufacturing a vessel (1) for housing a fluid, wherein the vessel (1) comprises at least one strut (3) extending through an inner space (19) of the vessel (1), wherein the method comprises the steps:
• manufacturing (S1) a core structure (2) as a shaping element of the vessel (1);
• during and/or after manufacturing (S1) the core structure (2), providing (S2) the at least one strut (3) such that at least one end portion (6) of the at least one strut (3) extends from an outer surface (7) of the core structure (2);
• bending (S3) the at least one end portion (6) of the at least one strut (3); and
• arranging (S4) at least one outer vessel layer (5) to cover the at least one bent (S3) end portion (6) of the at least one strut (3).

2. Method of manufacturing the vessel (1) according to claim 1, further comprising, before the bending step (S3), a step of arranging (S5) at least one inner vessel layer (4) to fully or partially cover the outer surface (7) of the core structure (2) such that the at least one end portion (6) of the at least one strut (3) extends through the at least one inner vessel layer (4).

3. Method of manufacturing the vessel (1) according to any one of the preceding claims, wherein the vessel (1) comprises a plurality of struts (3), and wherein in the step of arranging (S4) the at least one outer vessel layer (5), multiple outer vessel layers (5) are arranged (S4), and at least one additional bending step (S3) is carried out between the multiple steps (S4) of arranging outer vessel layers (5) such that at least one strut (3) includes at least one bent (S3) end portion (6) sandwiched between two outer vessel layers (5).

4. Method of manufacturing the vessel (1) according to any one of the preceding claims, wherein, during the bending step (S3), the at least one end portion (6), preferably only a tip (13) of the at least one end portion (6), of the least one strut (3) is brought into contact with an outer surface of the at least one inner vessel layer (4) or with an outer surface of the at least one outer vessel layer (5) or with an outer surface of the core structure (2).

5. Method of manufacturing the vessel according to claim any one of the preceding claims, wherein the at least one strut (3) is formed integrally with the core structure (2).

6. Method of manufacturing the vessel according to any one of the preceding claims, wherein the at least one strut (3) is arranged on and attached to the core structure (2), preferably to an outer surface (7) of the core structure (2).

7. Method of manufacturing the vessel (1) according to any one of the preceding claims, wherein, during arranging (S4) the least one outer vessel layer (5) and/or arranging (S5) the least one inner vessel layer (4), an inner space of the core structure (2) is pressurized.

8. Method of manufacturing the vessel according to any one of the preceding claims, wherein the step of arranging (S4, S5) at least one inner vessel layer (4) and/or at least one outer vessel layer (5) comprises or is a step of winding or placing a fiber reinforced plastic as an inner vessel layer (4) and/or as an outer vessel layer (5).

9. Method of manufacturing the vessel according to any one of the preceding claims, wherein, before arranging (S4, S5) the at least one outer vessel layer (5) and/or the at least one inner vessel layer (4), the at least one end portion (6) of the at least one strut (3) is sharpened (S6).

10. Method of manufacturing the vessel according to any one of the preceding claims, wherein the at least one strut (3) comprises fibers and especially comprises or is formed of fiber reinforced plastics.

11. Method of manufacturing the vessel according to claim 10, wherein, in the bending step (S3), the fibers of the at least one strut (3) are at least partially separated from each other and bent in the at least one end portion (6) of the at least one strut (3) to form a T-bend (9), a cross bend (10) and/or a mushroom bend (11).

12. Method of manufacturing the vessel according to any one of the preceding claims, wherein the core structure (2) is an injection molded thermoplastic skeleton (15).

13. Method of manufacturing the vessel according to any one of the preceding claims, wherein the core structure (2, 15) comprises a plurality of subunit core structures (16), which are joined to each other during the manufacturing of the core structure (2) preferably using attachment clips, gluing and/or welding.

14. Method of manufacturing the vessel according to any one of the preceding claims, wherein, after arranging (S4) the at least one outer vessel layer (5) or after arranging the at least one inner vessel layer (4), the core structure (2) is at least partially removed from the vessel (1) without removal of the at least one strut (3).

15. Vessel (1) for housing a fluid, comprising:
• at least one inner vessel layer (4);
• an outer vessel layer surrounding the at least one inner vessel layer (4); and
• at least one strut (3) extending through an inner space of the vessel (1) and comprising at least one end portion (6) extending through the at least one inner vessel layer (4); wherein
• the at least one strut (3) comprises at least one bent end portion (6), which is bent so as to be arranged between the at least one inner vessel layer (4) and the at least one outer vessel layer (5).

## Amended claims

### Amended claims in accordance with Rule 137(2) EPC.

1. Method of manufacturing a vessel (1) for housing a fluid, wherein the vessel (1) comprises at least one strut (3) extending through an inner space (19) of the vessel (1), wherein the method comprises the steps:
• manufacturing (S1) a core structure (2) as a shaping element of the vessel (1); **characterized by**:
• during and/or after manufacturing (S1) the core structure (2), providing (S2) the at least one strut (3) such that at least one end portion (6) of the at least one strut (3) extends from an outer surface (7) of the core structure (2);
• bending (S3) the at least one end portion (6) of the at least one strut (3); and
• arranging (S4) at least one outer vessel layer (5) to cover the at least one bent (S3) end portion (6) of the at least one strut (3).

2. Method of manufacturing the vessel (1) according to claim 1, further comprising, before the bending step (S3), a step of arranging (S5) at least one inner vessel layer (4) to fully or partially cover the outer surface (7) of the core structure (2) such that the at least one end portion (6) of the at least one strut (3) extends through the at least one inner vessel layer (4).

3. Method of manufacturing the vessel (1) according to any one of the preceding claims, wherein the vessel (1) comprises a plurality of struts (3), and wherein in the step of arranging (S4) the at least one outer vessel layer (5), multiple outer vessel layers (5) are arranged (S4), and at least one additional bending step (S3) is carried out between the multiple steps (S4) of arranging outer vessel layers (5) such that at least one strut (3) includes at least one bent (S3) end portion (6) sandwiched between two outer vessel layers (5).

4. Method of manufacturing the vessel (1) according to any one of the preceding claims, wherein, during the bending step (S3), the at least one end portion (6), preferably only a tip (13) of the at least one end portion (6), of the least one strut (3) is brought into contact with an outer surface of the at least one inner vessel layer (4) or with an outer surface of the at least one outer vessel layer (5) or with an outer surface of the core structure (2).

5. Method of manufacturing the vessel according to any one of the preceding claims, wherein the at least one strut (3) is formed integrally with the core structure (2).

6. Method of manufacturing the vessel according to any one of the preceding claims, wherein the at least one strut (3) is arranged on and attached to the core structure (2), preferably to an outer surface (7) of the core structure (2).

7. Method of manufacturing the vessel (1) according to any one of the preceding claims, wherein, during arranging (S4) the least one outer vessel layer (5) and/or arranging (S5) the least one inner vessel layer (4), an inner space of the core structure (2) is pressurized.

8. Method of manufacturing the vessel according to any one of the preceding claims, wherein the step of arranging (S4, S5) at least one inner vessel layer (4) and/or at least one outer vessel layer (5) comprises or is a step of winding or placing a fiber reinforced plastic as an inner vessel layer (4) and/or as an outer vessel layer (5).

9. Method of manufacturing the vessel according to any one of the preceding claims, wherein, before arranging (S4, S5) the at least one outer vessel layer (5) and/or the at least one inner vessel layer (4), the at least one end portion (6) of the at least one strut (3) is sharpened (S6).

10. Method of manufacturing the vessel according to any one of the preceding claims, wherein the at least one strut (3) comprises fibers and especially comprises or is formed of fiber reinforced plastics.

11. Method of manufacturing the vessel according to claim 10, wherein, in the bending step (S3), the fibers of the at least one strut (3) are at least partially separated from each other and bent in the at least one end portion (6) of the at least one strut (3) to form a T-bend (9), a cross bend (10) and/or a mushroom bend (11).

12. Method of manufacturing the vessel according to any one of the preceding claims, wherein the core structure (2) is an injection molded thermoplastic skeleton (15).

13. Method of manufacturing the vessel according to any one of the preceding claims, wherein the core structure (2, 15) comprises a plurality of subunit core structures (16), which are joined to each other during the manufacturing of the core structure (2) preferably using attachment clips, gluing and/or welding.

14. Method of manufacturing the vessel according to any one of the preceding claims, wherein, after arranging (S4) the at least one outer vessel layer (5) or after arranging the at least one inner vessel layer (4), the core structure (2) is at least partially removed from the vessel (1) without removal of the at least one strut (3).

15. Vessel (1) for housing a fluid, comprising:
• at least one inner vessel layer (4);
• an outer vessel layer surrounding the at least one inner vessel layer (4); and
• at least one strut (3) extending through an inner space of the vessel (1) and comprising at least one end portion (6) extending through the at least one inner vessel layer (4); **characterized in that**
• the at least one strut (3) comprises at least one bent end portion (6), which is bent so as to be arranged between the at least one inner vessel layer (4) and the at least one outer vessel layer (5).
